# EUROPEAN PATENT APPLICATION

(11) **EP 1 431 439 A1**
(43) Date of publication of application: **23.06.2004**
(21) Application number: 03257993.0
(22) Date of filing: 18.12.2003
(51) Int. Cl.: D06F 37/30, F16H 55/48

(54) **Improved pulleys**

(30) Priority: 21.12.2002 GB 0230000
(71) Applicant: Rolinx Plastics Company Limited, Wythenshawe, Manchester M23 9WP (GB)
(72) Inventor: Onyemem, Nick Uchechukwu, Wythenshawe Manchester M23 9WP (GB)
(74) Representative: Coates, Ian Harold

(57) **Abstract**

A pulley wheel (10) having a first side and a second side, said pulley wheel (10) comprising a central metal hub inset (11) and a perimeter portion (12), overmoulded over the central metal hub insert (11), said perimeter portion (12) being constructed from a plastics material.

## Description

### Field of the Invention

The present invention relates to pulley wheels and to a method of manufacture of pulley wheels. The invention is particularly applicable, but in way limited, to pulley wheels for use on washing machine drums.

### Background to the Invention

Pulley wheels on domestic washing machines are currently generally constructed from cast aluminium. Although other materials are used from time to time, cast aluminium is the most commonly used material. It is strong and durable and relatively easy to work with. However, it is also relatively expensive and there is therefore an opportunity for a cost-saving if a cheaper alternative with similar strength characteristics could be found.

A further problem arises in washing machines with conventional pulley wheels. A large proportion of the noise produced by a washing machine is thought to come from the back of the drum. One theory of the origin of this noise, put forward by the inventor of this invention, is that noise is caused by pockets of air trapped between castellations on the drum and the pulley. These pockets of air are compressed when the pulley travels over the castellations, compressing the air then release it and allowing the air pocket to reverberate against the machine outer walls.

It is therefore an object of the present invention to overcome, or at least mitigate, some or all of the above problems.

### Summary of the Invention

According to a first aspect of the present invention, there is provided a pulley wheel having a first side and a second side, said pulley wheel comprising a central metal hub insert and a perimeter portion, overmoulded over the central hub insert, said perimeter portion being constructed from a plastics material.

This two-part construction having a central metal region and a plastic perimeter results in a pulley wheel with similar strength to a cast aluminium equivalent.

Preferably the central insert is formed in the shape of a substantially rectangular cylinder with two opposing substantially linear faces and two opposite opposing curved faces. This arrangement prevents the metal insert from coming away from the plastic portion during torque transmission.

In a particularly preferred embodiment the metal hub insert incorporates a rib or flange around part or all of its perimeter edge. This provides a greater surface area for contact between the insert and the plastic perimeter.

Preferably the pulley is of a spoked design with a spoke emanating from each corner of the rectangular central hub insert.

Preferably the spokes incorporate one or more strengthening ribs running substantially the length of each spoke.

In a particularly preferred embodiment, these strengthening ribs extend from a first side of the pulley only, the second side of the pulley being substantially planer. This eliminates cavities or pockets on one side of the pulley wheel and reduces significantly the noise created during operation of a washing machine, for example.

Preferably the perimeter portion of the pulley wheel incorporates a strengthening rib or ribs extending around at least part of the circumference of the pulley. Preferably these circumferential ribs extend between adjacent spokes and, in a particularly preferred embodiment, partially down the sides of each spoke. These circumferential ribs are thus crescent shaped in form and are designed to spread the load from the tensioned belt down the respective spokes.

Preferably the pulley wheel incorporates a belt-running perimeter surface which is preferably substantially planer.

The invention also encompasses a method of manufacturing such a pulley wheel.

### Brief Description of the Drawings

The invention will now be described, by way of example only, with reference to the following drawings wherein:-
Figures 1A - 1E show various plan, perspective and cross-sectional views of a pulley wheel manufactured according to the present invention;

Figures 2A - 2C show various side, perspective and cross-sectional views of a pulley wheel insert.

### Description of the Preferred Embodiments

The invention will now be described, by way of example only. These examples are not the only ways to put the invention into practice but are the best ways currently known to the applicant.

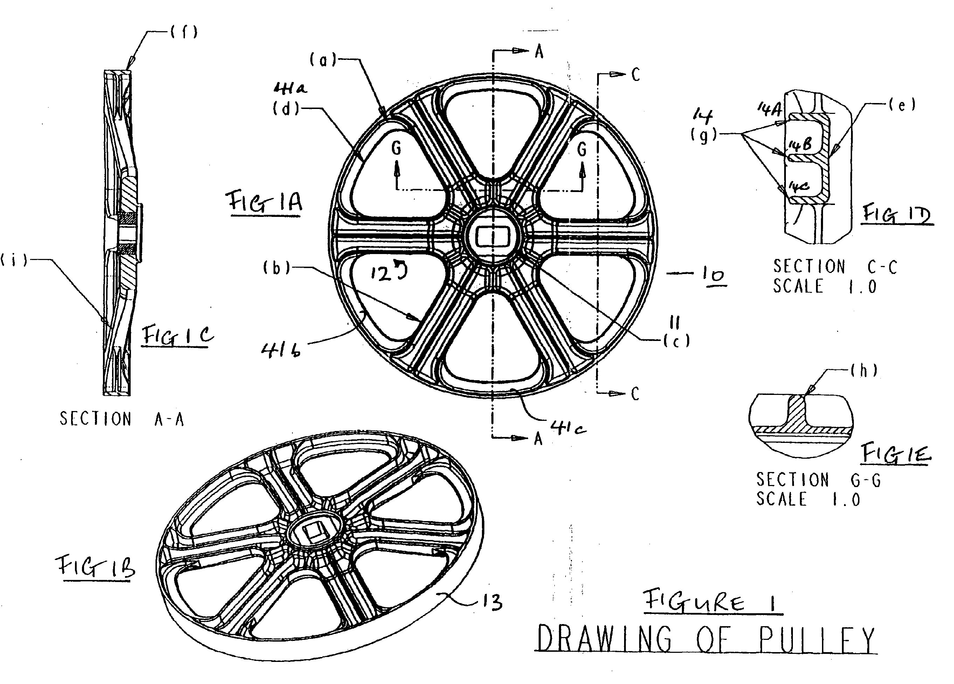

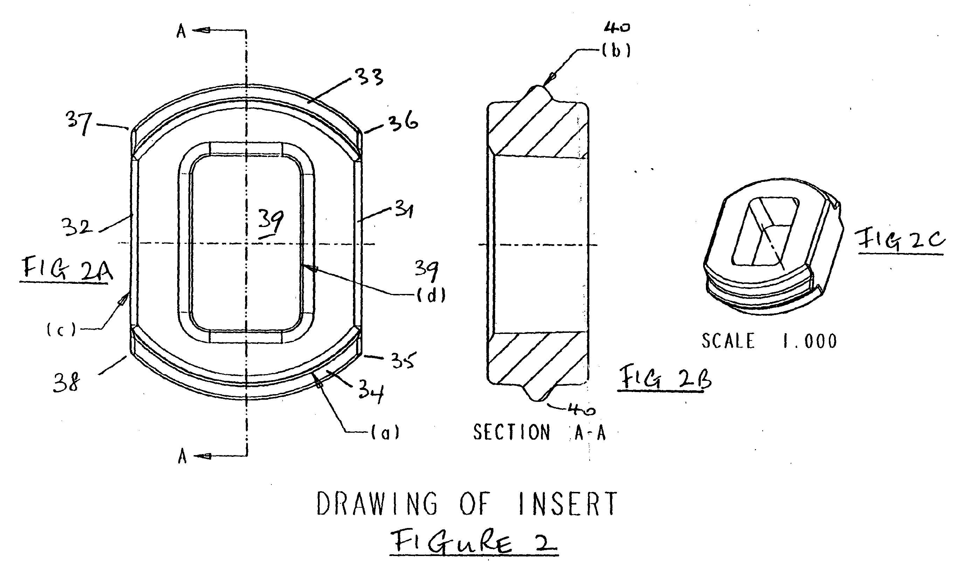

Referring to Figure 1, this shows a series of views of a complete pulley wheel 10. The pulley 10 consists of a central hub insert 11, shown in more detail in Figure 2, surrounded by a overmoulded perimeter portion 12. Around the circumference of the perimeter portion is a substantially flat running face 13.

The design in this example is a six spoke design and these spokes extend radially outwards from the hub and are equally spaced one from another around the pulley. However, the design allows for a variable number of spokes and these need not necessarily be spaced symmetrically around the circumference of the pulley wheel, although this is generally preferred.

Turning now to Figure 2, this illustrates an aluminium central metal hub insert 11. This is formed as a substantially rectangular cylindrical shape with two opposing substantially flat faces 31 and 32, and two opposite opposing faces 33 and 34 which are curved. In this example, the curves are formed from part of the perimeter of a circle. It follows, therefore, that there are four corners to this cylinder 35, 36, 37 and 38. An important feature of this design is that a spoke is aligned with each of these corners. This arrangement considerably increases the strength of a pulley.

The insert includes in its centre a rectangular cut out 39, though which, in use, a shaft protrudes. The pulley wheel transmits torque through this drive shaft. There is a ridge or flange 40 which extends around the curved portion of the insert. This provides an increased surface area of contact between the perimeter portion 12 and the hub insert 11. This also increases the strength of the assembly.

The perimeter portion 12 is overmoulded directly over the hub insert such that the two parts become integral as one. Once formed they cannot be detached one from another except by breaking the pulley wheel assembly.

There are several further important features of the perimeter portion 12. Firstly, the spokes are reinforced by a series of ribs 14, which are shown in more detail in Figure 1B. Three ribs are provided in this example but, within reason, any number of ribs could be provided. In this context, the term "a plurality of ribs" includes one or more ribs. It will be appreciated from Figure 1D that the ribs extend from one face, a first face, of the pulley only. The other, second face, of the perimeter portion is substantially planer. The term "substantially planer" in this context means that it is generally flat and that there are no significant cavities or shapes capable of trapping air pockets on that particular face.

A further strengthening rib, or series of ribs, 41 (a), 41 (b), 41 (c) ... is also provided. These ribs are located around the inside perimeter of the belt-running face 13. These ribs also extend down part of the spokes, such that they are crescent or concave/convex in shape. By extending these ribs down the spokes, the strength and rigidity of the assembly when loaded is significantly improved.

In summary, the aluminium insert 11 is cast as a cylindrical piece (a) with flats 31, 32 on opposite sides (c). Through the centre of the part is a rectangular cut out 39 through which a shaft protrudes. The pulley transmits torque via the insert to the shaft. Feature (b) 33, 34 is a rib on the circular face of the insert. (b) provides greater surface area contract between pulley insert allowing for greater surface area for plastic shrinkage onto the insert.

The pulley is a six-spoke design with an overmoulded central hub (c). On the perimeter is a flat belt running face 13 (f). Six spokes (b) join the rim and fan out at the inner surface of the rim to spread the belt tension. Three ribs (g) 14 on each spoke increase the static and torsional stiffness of the spokes preventing excessive deflection. An inner rib (d) 41 acts to prevent axial buckling. Six wider central ribs (h) stiffen the pulley and provide adequate flow of plastic to the central hub. Note that if the ribs are not sufficiently wide, the plastic around the rib will freeze off restricting further flow to the central hub area before it has been packed. An unpacked central hub is likely to lead to operational failures due to stress cracking. The rear of the pulley is flat (e) including ribs and central area, which reduces the noise levels generated during operation. All rib features are on the side of the pulley away from the rear of the washing machine drum, referred to as the first side. Feature (i) shows the angled offset for pulley face to the central hub. However, the design allows for a flat pulley with the pulley face and the central hub to be in line.

Making a constantly loaded plastic pulley exhibit acceptable levels of creep calls from well considered material selection. 50% Glass filled Nylon was chosen due to its chemical resistance to aggressive environments, high creep resistance, good stiffness, and flexural fatigue resistance. An overmoulded insert was designed to meet particular assembly requirements. Compression on a metal insert satisfies the particular fastening requirements without the creep issues associated with applying a constant force to a plastic.

Depending on the application, any pulley utilising one or more of the features described above would work. That is to say, the various features described above can be used independently or in any combination. For instance, a pulley with all the features described except the overmoulded insert would work.

Another alternative would be to make the pulley out of a different material other than 50% glass filled Nylon. Other materials may provide similar levels of stiffness, creep resistance, flexural fatigue resistance and chemical resistance. However, in applications where the operating conditions or load criteria are less severe, a lower grade of material may suffice.

Similarly, making the insert out of another material other than cast aluminium could be possible, depending on operating conditions, expected part life or loads experienced.

In relation to washing machine drums, a number of performance criteria were set which account for the final design. The design had to withstand compressive loading, belt tension, torque loading, elevated temperatures, an aggressive chemical environment. Just as importantly, there must be no discernible difference between the noise levels generated with an aluminium pulley as with the plastic one.

In this application, noise can be created by pockets of air trapped between the castellations on the drum rear and pulley. These pockets of air are compressed when the pulley travels over the castellations, compressing the air then releasing it and allowing the air pocket to reverberate against the machine outer walls. The pulley design creates no discernible noise levels over a standard pulley by having a flat back design. This means that air pockets are reduced when the spoke travels over a drum castellation. Smaller air pockets therefore result in less noise created. Cross-section of pulleys to a standard design shows ribs on both sides. The pulley design chosen has all its rib features on one side away from the drum. As stress associated to moment varies proportionally with the moment applied, the maximum distance from the neutral axis and the second moment of area, the calculable difference of stress between both designs is negligible.

To improve stiffness, the design has a rounded extension to each spoke as it joins the rim. The aim of this feature is to spread the load exerted on the rim by the pulley under tension.

In relation to torsional rigidity, the insert is responsible for transmitting torsion from the belt to the central shaft. The design ensures that the strongest point from a material weldpoint perspective is coincident with the most stressed area. Plastic can be injected from six points or three into the central hub area. Each corner of the insert is a stress-raiser and is positioned at a rib at the centre of a spoke.

One of the key features in washing machine design is noise reduction. The rear of the pulley is flat in design, which is contrary to a standard design practice. Although the design chosen is not optimal for integral stiffness, it offers the best compromise between stiffness and noise created. The flat rear of the pulley offers lower noise emissions against the castellations of the rear drum.

The pulley has assembly requirements, which require a clamping force to be applied through the centre. Applying a compressive force directly to a plastic pulley would result in material creep with a loss of compressive loading. The insert is made from cast aluminium and plastic is injection moulded around it. There are ribs on each side of the insert to provide greater plastic to metal surface contact. The flats on each side of the insert provide the means for torque transmission.

## Claims

1. A pulley wheel having a first side and a second side, said pulley wheel comprising a central metal hub inset and a perimeter portion, overmoulded over the central metal hub insert, said perimeter portion being constructed from a plastics material.

2. A pulley wheel as claimed in Claim 1 wherein said central insert is formed in the shape of a substantially rectangular cylinder with two substantially linear opposing faces and two opposite opposing curved faces.

3. A pulley wheel as claimed in Claim 1 or Claim 2 wherein the metal hub insert incorporates a rib or flange around part or all of its perimeter edge.

4. A pulley wheel as claimed in any preceding claim when dependent on claim 2, wherein the pulley is of a spoked design with a spoke emanating from each corner of the rectangular central hub insert.

5. A pulley wheel as claimed in Claim 4 wherein the spokes incorporate one or more strengthening ribs running substantially the length of each spoke.

6. A pulley wheel as claimed in Claim 5 wherein the strengthening ribs extend from a first side of the pulley only, the second side of the pulley being substantially planer.

7. A pulley wheel according to any preceding claim wherein the perimeter portion incorporates a strengthening rib or ribs extending around at least part of the circumference of the pulley.

8. A pulley wheel according to Claim 7 when dependent on Claim 4, Claim 5 or Claim 6, wherein the circumferential ribs extend between adjacent spokes.

9. A pulley wheel according to Claim 8 wherein the circumferential ribs are crescent shaped, extending around the circumference between adjacent ribs and partially down the side of each spoke.

10. A pulley wheel as claimed in any preceding claim wherein the pulley incorporates a belt-running perimeter surface.

11. A pulley wheel as claimed in Claim 10 wherein the belt-running perimeter surface is substantially planer.
